(19) Europäisches Patentamt
European Patent Office
Office européen des brevets

(11) **EP 3 872 473 B1**

(12) **FASCICULE DE BREVET EUROPEEN**

(45) Date de publication et mention
de la délivrance du brevet:
**07.06.2023 Bulletin 2023/23**

(21) Numéro de dépôt: **21155210.4**

(22) Date de dépôt: **04.02.2021**

(51) Classification Internationale des Brevets (IPC):
***G01M 3/28*** *(2006.01)*

(52) Classification Coopérative des Brevets (CPC):
**G01M 3/2807;** Y04S 20/30

(54) **PROCEDE DE DETECTION D'UNE FUITE DE FLUIDE**

VERFAHREN ZUR ERKENNUNG EINES FLUIDLECKS

METHOD FOR DETECTING A FLUID LEAK

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.02.2020 FR 2002034**

(43) Date de publication de la demande:
**01.09.2021 Bulletin 2021/35**

(73) Titulaire: **Sagemcom Energy & Telecom SAS
92500 Rueil-Malmaison (FR)**

(72) Inventeur: **TEBOULLE, Henri
92500 RUEIL MALMAISON (FR)**

(74) Mandataire: **Lavaud, Thomas et al
Cabinet Boettcher
16, rue Médéric
75017 Paris (FR)**

(56) Documents cités:
**WO-A1-2015/159279      DE-A1- 3 833 127
DE-A1- 19 501 044      US-A- 5 866 803
US-A1- 2009 299 660**

**Description**

L'invention concerne le domaine des compteurs de fluide communicants.

ARRIERE PLAN DE L'INVENTION

Les compteurs de gaz modernes, dits « communicants », remplacent progressivement les compteurs de gaz traditionnels.

Un compteur de gaz communicant permet bien sûr de mesurer la quantité de gaz consommée par l'installation d'un client pour facturer cette consommation au client. Un compteur de gaz communicant permet aussi de produire, de transmettre, de recevoir et d'analyser des données diverses (relatives par exemple à la consommation de l'installation, à l'état du réseau de distribution de gaz, ou bien au fonctionnement du compteur), de manière à mettre en oeuvre de nouvelles fonctionnalités. Ces nouvelles fonctionnalités bénéficient à la fois au distributeur de gaz, au gestionnaire du réseau et au client.

Un compteur de gaz communicant permet ainsi par exemple au client d'améliorer le suivi de sa consommation et donc de mieux la maîtriser, d'optimiser sa facturation, de ne pas être dérangé par les interventions des opérateurs grâce au relevé à distance, etc.

Il est envisagé d'utiliser les nouvelles capacités des compteurs de gaz communicants pour améliorer la sécurité de la distribution du gaz et, en particulier, pour améliorer la détection des fuites de gaz dans les réseaux de distribution de gaz. Les fuites de gaz peuvent en effet produire des accidents aux conséquences dramatiques.

Le document WO 2015/159279 A1 décrit un appareil d'alerte et de détection de fuite configuré pour détecter une fuite de liquide et de gaz et avertir une personne responsable

OBJET DE L'INVENTION

L'invention a pour objet de détecter, avec une probabilité d'erreur très faible, une fuite de fluide survenant dans un réseau de distribution de fluide équipé de compteurs de fluide communicants.

RESUME DE L'INVENTION

En vue de la réalisation de ce but, on propose un procédé de détection d'une fuite de fluide dans un réseau de distribution de fluide selon la revendication 1.

Le procédé de détection selon l'invention met donc en oeuvre, pour chaque intervalle temporel (de durée égale à une heure par exemple) de chaque période de mesure (de durée égale à un jour par exemple), une comparaison entre, d'une part, la quantité de fluide distribuée via le conduit principal, et d'autre part, la somme des quantités de fluide distribuées via les conduits secondaires. Le procédé de détection permet ainsi de détecter une fuite de fluide, survenant entre le compteur de fluide principal et les compteurs de fluide secondaires, avec une probabilité d'erreur très faible, typiquement inférieure à 1%.

On propose aussi un procédé de détection tel que celui qui vient d'être décrit, dans lequel, pour chaque intervalle temporel de la période de mesure donnée, la grandeur de comparaison est égale au rapport entre la mesure principale et la somme des mesures secondaires.

On propose aussi un procédé de détection tel que celui qui vient d'être décrit, comprenant l'étape de déterminer un maximum des grandeurs de comparaison sur la période de mesure donnée, et de détecter qu'une fuite de fluide a eu lieu pendant la période de mesure donnée si le maximum des grandeurs de comparaison est supérieur à un seuil prédéterminé.

On propose aussi un procédé de détection tel que celui qui vient d'être décrit, dans lequel, pour le compteur de fluide principal, on évalue une première mesure principale, représentative d'une quantité de fluide distribuée via le conduit principal au cours du premier intervalle temporel de la période de mesure donnée, en utilisant la formule suivante :

$$\Delta CCQ_{j\_0} = CQ_{j+1} - \left(CQ_j + \sum_{k=1}^{k=K-1} \Delta CCQ_{j\_k}\right)$$

où :

- j est la période de mesure donnée ;
- K est le nombre d'intervalles temporels dans chaque période de mesure ;
- $\Delta CCQ_{j\_0}$ est la première mesure principale ;

- $CQ_j$ est une mesure principale totale représentative d'une quantité de fluide distribuée via le conduit principal jusqu'au début de la période de mesure donnée ;
- $CQ_{j+1}$ est une mesure principale totale représentative d'une quantité de fluide distribuée via le conduit principal jusqu'au début de la période de mesure suivant la période de mesure donnée ;
- les $\Delta CCQ_{j\_k}$ sont les mesures principales pour les intervalles temporels de la période de mesure donnée suivant le premier intervalle temporel.

On propose aussi un procédé de détection tel que celui qui vient d'être décrit, dans lequel chaque période de mesure a pour durée un jour et dans lequel chaque intervalle temporel a pour durée une heure.

On propose aussi un procédé de détection tel que celui qui vient d'être décrit, le compteur de fluide principal et les compteurs de fluide secondaires étant des compteurs de gaz.

On propose de plus un concentrateur de données comportant un module de communication agencé pour recevoir les mesures principales transmises par le compteur de fluide principal et les mesures secondaires transmises par les compteurs de fluide secondaires, ainsi qu'un module de traitement agencé pour mettre en oeuvre un procédé de détection tel que celui qui vient d'être décrit.

On propose en outre un système comprenant un concentrateur de données tel que celui qui vient d'être décrit et le compteur de fluide principal, le concentrateur de données et le compteur de fluide principal étant situés dans un même local.

On propose en outre un programme d'ordinateur comprenant des instructions qui conduisent le concentrateur de données tel que précédemment décrit à exécuter les étapes d'un procédé de détection tel que précédemment décrit.

On propose en outre un support d'enregistrement lisible par ordinateur, sur lequel est enregistré le programme d'ordinateur qui vient d'être décrit.

L'invention sera mieux comprise à la lumière de la description qui suit d'un mode de mise en oeuvre particulier non limitatif de l'invention.

BREVE DESCRIPTION DU DESSIN

Il sera fait référence au dessin annexé de la figure unique :

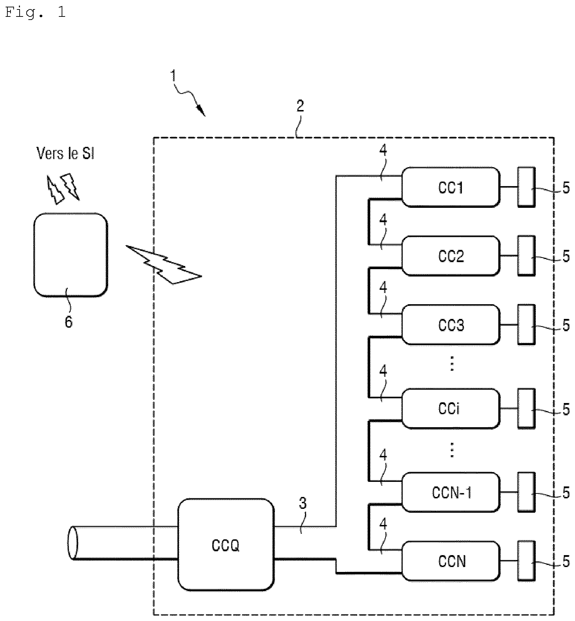

[Fig. 1] la figure 1 représente un réseau de distribution de gaz dans lequel est mise en oeuvre l'invention.

DESCRIPTION DETAILLEE DE L'INVENTION

En référence à la figure 1, le procédé de détection d'une fuite de fluide selon l'invention est ici mis en oeuvre dans un réseau de distribution de gaz 1 destiné à alimenter en gaz un « quartier » 2, c'est-à-dire une zone géographique comprenant une pluralité d'installations de gaz situées chacune par exemple dans une habitation, un restaurant, un commerce, etc.

Le réseau de distribution de gaz 1 comporte un conduit principal 3 et des conduits secondaires 4 reliés chacun à une installation de gaz 5 distincte.

Un compteur de gaz principal CCQ (pour « Compteur de Gaz Communicant de Quartier ») est raccordé au conduit principal 3.

Un compteur de gaz secondaire CCi (pour « Compteur de Gaz Communicant ») distinct est raccordé à chaque conduit secondaire 4. La variable i varie de 1 à N, N étant le nombre de conduits secondaires 4 et donc de compteurs de gaz secondaires CCi.

Les conduits secondaires 4 sont issus du conduit principal 3, c'est-à-dire qu'ils sont tous connectés au conduit principal 3 en aval du compteur de gaz principal CCQ : le conduit principal 3 se divise, en aval du compteur de gaz principal CCQ, en un faisceau formé par les conduits secondaires 4.

Ici, par « en amont », on entend du côté du réseau de distribution de gaz, et par « en aval », on entend du côté des installations de gaz 5.

Le compteur de gaz principal CCQ et les compteurs de gaz secondaires CCi comportent chacun un module de communication leur permettant de communiquer via une communication radio, qui utilise ici le standard *Wize* opérant à la fréquence de 169MHz.

Le réseau de distribution 1 comporte aussi un concentrateur de données 6.

Le concentrateur de données 6 comprend un premier module de communication permettant au concentrateur de données 6 de communiquer via la communication radio précédemment évoquée, ainsi qu'un deuxième module de communication lui permettant de communiquer via un réseau cellulaire de type 2G, 3G, 4G, Cat-M, NB-IOT, etc.

Le concentrateur de données 6 comporte aussi un module de traitement comprenant au moins un composant de traitement adapté à exécuter des instructions d'un programme pour mettre en oeuvre les étapes du procédé de détection qui vont être décrites ci-après. Le composant de traitement est par exemple un processeur, un microcontrôleur, ou bien un circuit logique programmable tel qu'un FPGA (pour *Field Programmable Gate Arrays*) ou un ASIC (pour *Application Spécifie Integrated Circuit*).

Le concentrateur de données 6 peut être soit colocalisé avec le compteur de gaz principal CCQ, c'est-à-dire que le concentrateur de données 6 et le compteur de gaz principal CCQ sont situés dans un même local, soit délocalisé.

Le concentrateur de données 6 communique aussi avec le compteur de gaz principal CCQ et les compteurs de gaz secondaires CCi en utilisant la communication radio.

Le concentrateur de données 6 communique aussi, sur le réseau cellulaire, avec un Système d'Information (SI) du gestionnaire du réseau de distribution de gaz.

Le procédé de détection selon l'invention vise à détecter une fuite de gaz survenant dans le réseau de distribution de gaz 1 entre le compteur de gaz principal CCQ et les compteurs de gaz secondaires CCi, c'est à dire dans la zone du réseau de distribution de gaz 1 située en aval du compteur de gaz principal CCQ et en amont de chacun des compteurs de gaz secondaires CCi.

Le procédé de détection comprend un certain nombre d'étapes, qui sont répétées par périodes de mesure successives découpées chacune en intervalles temporels. Ici, une période de mesure a pour durée un jour (et débute à minuit), et chaque intervalle temporel a pour durée une heure. Chaque période de mesure comprend ainsi 24 intervalles temporels.

Pour chaque intervalle temporel d'une période de mesure donnée j, c'est-à-dire pour chaque heure d'un jour donné j, et pour chaque compteur de gaz secondaire CCi, le concentrateur de données 6 acquiert une mesure secondaire réalisée par ledit compteur de gaz secondaire CCi et représentative d'une quantité de gaz distribuée via le conduit secondaire 4 auquel est raccordé ledit compteur de gaz secondaire CCi au cours dudit intervalle temporel.

Ces mesures secondaires sont incluses dans une courbe de charge notée Chi que le concentrateur de données 6 reçoit chaque jour, plusieurs fois par jour, de chaque compteur de gaz secondaire CCi. La courbe de charge Chi est composée d'un index de référence noté $Ci_j$, et de deltas d'index successifs notés $\Delta i_{j\_1}$ à $\Delta i_{j\_23}$.

Chaque delta d'index $\Delta i_{j\_k}$ est une mesure secondaire réalisée par le compteur de gaz secondaire CCi pour le jour donné j. Cette mesure secondaire est représentative d'une quantité de gaz qui est distribuée au cours du $k^{\text{ème}}$ intervalle temporel, via le conduit secondaire 4 auquel est raccordé ledit compteur de gaz secondaire CCi, à l'installation de gaz 5 reliée audit conduit secondaire 4.

Ainsi, par exemple, entre 2h et 3h du matin, c'est-à-dire au cours du troisième intervalle temporel du jour donné j, le compteur de gaz secondaire CCi a mesuré qu'une quantité de gaz égale à $\Delta i_{j\_2}$ a été distribuée via le conduit secondaire 4 auquel il est raccordé.

L'index de référence $Ci_j$, quant à lui, est une mesure secondaire totale représentative d'une quantité de gaz distribuée via le conduit secondaire 4 auquel est raccordé le compteur de gaz secondaire CCi jusqu'au début du jour donné j.

Le concentrateur de données 6 acquiert aussi, pour le jour suivant j+1 qui suit le jour donné j, et pour chaque compteur de gaz secondaire CCi, la mesure secondaire totale $Ci_{j+1}$ représentative d'une quantité de gaz distribuée via le conduit secondaire 4 auquel est raccordé le compteur de gaz secondaire CCi jusqu'au début du jour j+1 suivant le jour donné j.

Le concentrateur de données 6 acquiert les mesures secondaires grâce à son premier module de communication.

Pour chaque intervalle temporel du jour donné j, le concentrateur de données 6 acquiert aussi une courbe de charge ChQ qui est composée d'un index de référence noté $CQ_j$, et de deltas d'index successifs notés $\Delta CCQ_{j\_1}$ à $\Delta CCQ_{j\_23}$.

Chaque delta d'index $\Delta CCQ_{j\_k}$ est une mesure principale réalisée par le compteur de gaz principal CCQ. Cette mesure principale est représentative d'une quantité de gaz qui est distribuée au cours du $k^{\text{ème}}$ intervalle temporel, via le conduit principal 3.

L'index de référence $CQ_j$, quant à lui, est une mesure principale totale représentative d'une quantité de gaz distribuée via le conduit principal 3 jusqu'au début du jour donné j.

Le concentrateur de données 6 acquiert aussi, pour le jour suivant j+1 qui suit le jour donné j, la mesure principale totale $CQ_{j+1}$ représentative d'une quantité de gaz distribuée via le conduit principal 3 jusqu'au début du jour j+1 suivant le jour donné j.

Le concentrateur de données 6 acquiert les mesures principales grâce à son premier module de communication.

On note que pour chaque compteur de gaz secondaire CCi, le concentrateur de données 6 ne reçoit pas directement la première mesure secondaire représentative d'une quantité de gaz distribuée via le conduit secondaire 4 auquel est raccordé ledit compteur de gaz secondaire CCi au cours du premier intervalle temporel de la période de mesure donnée (c'est-à-dire entre minuit et 1h du matin du jour donné j).

Cette première mesure secondaire $\Delta i_{j\_0}$ est évaluée en utilisant la formule suivante :

$$\Delta\mathbf{i}_{j\_0} = Ci_{j+1} - (Ci_j + \sum_{k=1}^{k=K-1} \Delta\mathbf{i}_{j\_k})$$

où :

- K est le nombre d'intervalles temporels dans chaque période de mesure (ici, K=24) ;
- $\Delta i_{j\_0}$ est la première mesure secondaire ;
- $Ci_j$ est la mesure secondaire totale représentative d'une quantité de gaz distribuée via le conduit secondaire 4 auquel est raccordé le compteur de gaz secondaire CCi jusqu'au début de la période de mesure donnée ;
- $Ci_{j+1}$ est la mesure secondaire totale représentative d'une quantité de gaz distribuée via le conduit secondaire 4 auquel est raccordé ledit compteur de gaz secondaire CCi jusqu'au début de la période de mesure suivant la période de mesure donnée ;
- les $\Delta i_{j\_k}$ sont les mesures secondaires pour les intervalles temporels de la période de mesure donnée suivant le premier intervalle temporel.

De même, le concentrateur de données 6 ne reçoit pas directement la première mesure principale, représentative d'une quantité de gaz distribuée via le conduit principal 3 au cours du premier intervalle temporel de la période de mesure donnée.

La première mesure principale est évaluée en utilisant la formule suivante :

$$\Delta CCQ_{j\_0} = CQ_{j+1} - (CQ_j + \sum_{k=1}^{k=K-1} \Delta CCQ_{j\_k})$$

où :

- K est le nombre d'intervalles temporels dans chaque période de mesure (ici K=24) ;
- $\Delta CCQ_{j\_0}$ est la première mesure principale ;
- $CQ_j$ est une mesure principale totale représentative d'une quantité de gaz distribuée via le conduit principal jusqu'au début de la période de mesure donnée ;
- $CQ_{j+1}$ est une mesure principale totale représentative d'une quantité de gaz distribuée via le conduit principal jusqu'au début de la période de mesure suivant la période de mesure donnée ;
- les $\Delta CCQ_{j\_k}$ sont les mesures principales pour les intervalles temporels de la période de mesure donnée suivant le premier intervalle temporel.

Le concentrateur de données 6 calcule alors, pour chaque intervalle temporel de la période de mesure donnée, une grandeur de comparaison représentative de la mesure principale et de la somme des mesures secondaires. Le concentrateur de données 6 déduit ensuite des grandeurs de comparaison si une fuite de gaz s'est produite ou non au cours de la période de mesure donnée.

Pour chaque intervalle temporel de la période de mesure donnée, la grandeur de comparaison est égale au rapport entre la mesure principale et la somme des mesures secondaires.

Le concentrateur de données 6 détermine un maximum des grandeurs de comparaison sur la période de mesure donnée, et détecte qu'une fuite de gaz a eu lieu pendant la période de mesure donnée si le maximum des grandeurs de comparaison est supérieur à un seuil prédéterminé.

Ainsi, pour le jour donné j et pour l'intervalle temporel k, la grandeur de comparaison est égale à :

$$\left(\frac{\Delta CCQ_{j\_k}}{\sum_{i=1}^{i=N} \Delta i_{j\_k}}\right)$$

Ici, le seuil prédéterminé est égal à 105%, de sorte que le concentrateur de données 6 détecte une fuite de gaz si :

$$MAX_{k=0 \text{ à } k=K-1}\left(\frac{\Delta CCQ_{j\_k}}{\sum_{i=1}^{i=N} \Delta i_{j\_k}}\right) > 105\%$$

,

avec K=24.

Si une fuite de gaz est détectée pour le jour donné j, le concentrateur de données 6 envoie au SI un message d'alarme via le réseau cellulaire, indiquant qu'une fuite a eu lieu au cours du jour donné j dans le quartier 2 du compteur de gaz principal CCQ.

Bien entendu, l'invention n'est pas limitée au mode de réalisation décrit mais englobe toute variante entrant dans le champ de l'invention telle que définie par les revendications.

Les moyens de communication entre, d'une part, les compteurs de gaz et le concentrateur de données, et d'autre part, entre le concentrateur de données et le SI, pourraient être différents de ceux décrits ici.

L'invention pourrait être mise en oeuvre dans un réseau de distribution d'un fluide autre que le gaz : eau, pétrole, etc.

## Revendications

1. Procédé de détection d'une fuite de fluide dans un réseau de distribution de fluide (1) comprenant un conduit principal (3) auquel est raccordé un compteur de fluide principal (CCQ), et des conduits secondaires (4) issus du conduit principal (3) et auxquels sont raccordés des compteurs de fluide secondaires (CCi), le procédé de détection comprenant les étapes suivantes, répétées par périodes de mesure successives découpées chacune en intervalles temporels, de :

   - pour chaque intervalle temporel d'une période de mesure donnée, acquérir une mesure principale réalisée par le compteur de fluide principal (CCQ) et représentative d'une quantité de fluide distribuée via le conduit principal (3) au cours dudit intervalle temporel, et, pour chaque compteur de fluide secondaire (CCi), acquérir une mesure secondaire réalisée par ledit compteur de fluide secondaire et représentative d'une quantité de fluide distribuée via le conduit secondaire (4) auquel est raccordé ledit compteur de fluide secondaire au cours dudit intervalle temporel ;
   - calculer, pour chaque intervalle temporel de la période de mesure donnée, une grandeur de comparaison représentative de la mesure principale et de la somme des mesures secondaires ;
   - déduire des grandeurs de comparaison si une fuite de fluide s'est produite ou non au cours de la période de mesure donnée, **caractérisé en ce que** le procédé de détection comporte, pour chaque compteur de fluide secondaire (CCi), une évaluation d'une première mesure secondaire, représentative d'une quantité de fluide distribuée via le conduit secondaire (4) auquel est raccordé ledit compteur de fluide secondaire (CCi) au cours du premier intervalle temporel de la période de mesure donnée, qui est obtenue en retranchant :

      - à une mesure secondaire totale représentative d'une quantité de fluide distribuée via le conduit secondaire (4) auquel est raccordé ledit compteur de fluide secondaire jusqu'au début de la période de mesure suivant la période de mesure donnée,

      la somme :

      - d'une mesure secondaire totale représentative d'une quantité de fluide distribuée via le conduit secondaire (4) auquel est raccordé ledit compteur de fluide secondaire jusqu'au début de la période de mesure donnée,
      - et de la somme des mesures secondaires pour tous les intervalles temporels de la période de mesure donnée suivant le premier intervalle temporel.

2. Procédé de détection selon la revendication 1, dans lequel, pour chaque intervalle temporel de la période de mesure donnée, la grandeur de comparaison est égale au rapport entre la mesure principale et la somme des mesures secondaires.

3. Procédé de détection selon la revendication 2, comprenant l'étape de déterminer un maximum des grandeurs de comparaison sur la période de mesure donnée, et de détecter qu'une fuite de fluide a eu lieu pendant la période de mesure donnée si le maximum des grandeurs de comparaison est supérieur à un seuil prédéterminé.

4. Procédé de détection selon l'une des revendications précédentes, dans lequel, pour le compteur de fluide principal (CCQ), on évalue une première mesure principale, représentative d'une quantité de fluide distribuée via le conduit principal (3) au cours du premier intervalle temporel de la période de mesure donnée, en utilisant la formule suivante :

$$\Delta CCQ_{j\_0} = CQ_{j+1} - \left(CQ_j + \sum_{k=1}^{k=K-1} \Delta CCQ_{j\_k}\right)$$

où :

- j est la période de mesure donnée ;
- K est le nombre d'intervalles temporels dans chaque période de mesure ;
- $\Delta CCQ_{j\_0}$ est la première mesure principale ;
- $CQ_j$ est une mesure principale totale représentative d'une quantité de fluide distribuée via le conduit principal jusqu'au début de la période de mesure donnée ;
- $CQ_{j+1}$ est une mesure principale totale représentative d'une quantité de fluide distribuée via le conduit principal jusqu'au début de la période de mesure suivant la période de mesure donnée ;
- les $\Delta CCQ_{j\_k}$ sont les mesures principales pour les intervalles temporels de la période de mesure donnée suivant le premier intervalle temporel.

5. Procédé de détection selon l'une des revendications précédentes, dans lequel chaque période de mesure a pour durée un jour et dans lequel chaque intervalle temporel a pour durée une heure.

6. Procédé de détection selon l'une des revendications précédentes, le compteur de fluide principal (CCQ) et les compteurs de fluide secondaires (CCi) étant des compteurs de gaz.

7. Concentrateur de données comportant un module de communication agencé pour recevoir les mesures principales transmises par le compteur de fluide principal (CCQ) et les mesures secondaires transmises par les compteurs de fluide secondaires (CCi), ainsi qu'un module de traitement agencé pour mettre en oeuvre un procédé de détection selon l'une des revendications précédentes.

8. Système comprenant un concentrateur de données (6) selon la revendication 7 et le compteur de fluide principal (CCQ), le concentrateur de données (6) et le compteur de fluide principal (CCQ) étant situés dans un même local.

9. Programme d'ordinateur comprenant des instructions qui conduisent le concentrateur de données (6) selon la revendication 7 à exécuter les étapes d'un procédé de détection selon l'une des revendications 1 à 6.

10. Support d'enregistrement lisible par ordinateur, sur lequel est enregistré le programme d'ordinateur selon la revendication 9.


**Patentansprüche**

1. Verfahren zur Erkennung eines Fluidlecks in einem Fluidverteilungsnetz (1), das eine Hauptleitung (3) umfasst, an die ein Hauptfluidzähler (CCQ) angeschlossen ist, und sekundäre Leitungen (4), die von der Hauptleitung (3) abgehen und an die sekundäre Fluidzähler (CCi) angeschlossen sind, wobei das Erkennungsverfahren die folgenden Schritte umfasst, die über aufeinanderfolgende Messperioden, die jeweils in Zeitintervalle unterteilt sind, wiederholt werden:

   - für jedes Zeitintervall einer gegebenen Messperiode, Erfassen einer Hauptmessung, die von dem Hauptfluidzähler (CCQ) durchgeführt wird und repräsentativ für eine Fluidmenge ist, die über die Hauptleitung (3) während des genannten Zeitintervalls verteilt wird, und für jeden sekundären Fluidzähler (CCi), Erfassen einer sekundären Messung, die von dem genannten sekundären Fluidzähler durchgeführt wird und repräsentativ für eine Fluidmenge ist, die über die sekundäre Leitung (4) verteilt wird, an die der genannte sekundäre Fluidzähler während des genannten Zeitintervalls angeschlossen ist;
   - Berechnen einer Vergleichsgröße, die repräsentativ für die Hauptmessung und die Summe der sekundären Messungen ist, für jedes Zeitintervall der gegebenen Messperiode;
   - Ableiten aus Vergleichsgrößen, ob während der gegebenen Messperiode ein Fluidleck aufgetreten ist oder nicht,
   **dadurch gekennzeichnet, dass** das Erkennungsverfahren für jeden sekundären Fluidzähler (CCi) eine Evaluierung einer ersten sekundären Messung umfasst, die repräsentativ für eine Fluidmenge ist, die über die sekundäre Leitung (4) verteilt wird, an die der genannte sekundäre Fluidzähler (CCi) während des ersten Zeitintervalls der gegebenen Messperiode angeschlossen ist, und die man erhält, indem abgezogen wird:

- von einer gesamten sekundären Messung, die repräsentativ für eine Fluidmenge ist, die über die sekundäre Leitung (4), an die der genannte sekundäre Fluidzähler angeschlossen ist, bis zum Beginn der Messperiode, die auf die gegebene Messperiode folgt, verteilt wird,

die Summe:

- einer gesamten sekundären Messung, die repräsentativ für eine Fluidmenge ist, die über die sekundäre Leitung (4), an die der genannte sekundäre Fluidzähler angeschlossen ist, bis zum Beginn der gegebenen Messperiode verteilt wird,
- und der Summe der sekundären Messungen für alle Zeitintervalle der gegebenen Messperiode, die auf das erste Zeitintervall folgen.

2. Erkennungsverfahren nach Anspruch 1, bei dem die Vergleichsgröße für jedes Zeitintervall der gegebenen Messperiode gleich dem Verhältnis zwischen der Hauptmessung und der Summe der sekundären Messungen ist.

3. Erkennungsverfahren nach Anspruch 2, umfassend den Schritt des Bestimmens eines Maximums der Vergleichsgrößen über die gegebene Messperiode, und des Erkennens, dass ein Fluidleck während der gegebenen Messperiode aufgetreten ist, wenn das Maximum der Vergleichsgrößen größer als ein vorbestimmter Schwellenwert ist.

4. Erkennungsverfahren nach einem der vorhergehenden Ansprüche, bei dem für den Hauptfluidzähler (CCQ) eine erste Hauptmessung evaluiert wird, die repräsentativ für eine Fluidmenge ist, die über die Hauptleitung (3) während des ersten Zeitintervalls der gegebenen Messperiode verteilt wird, indem die folgende Formel verwendet wird:

$$\Delta CCQ_{j\_0} = CQ_{j+1} - \left(CQ_j + \sum_{k=1}^{k=K-1} \Delta CCQ_{j\_k}\right),$$

wobei

- $j$ die gegebene Messperiode ist;
- $K$ die Anzahl an Zeitintervallen in jeder Messperiode ist;
- $\Delta CCQ_{j\_0}$ die erste Hauptmessung ist;
- $CQ_j$ eine gesamte Hauptmessung ist, die repräsentativ für eine Fluidmenge ist, die über die Hauptleitung bis zum Beginn der gegebenen Messperiode verteilt wird;
- $CQ_{j+1}$ eine gesamte Hauptmessung ist, die repräsentativ für eine Fluidmenge ist, die über die Hauptleitung bis zum Beginn der Messperiode, die auf die gegebene Messperiode folgt, verteilt wird;
- die $\Delta CCQ_{j\_k}$ die Hauptmessungen für die Zeitintervalle der gegebenen Messperiode sind, die auf das erste Zeitintervall folgen.

5. Erkennungsverfahren nach einem der vorhergehenden Ansprüche, bei dem jede Messperiode eine Dauer von einem Tag und bei dem jedes Zeitintervall eine Dauer von einer Stunde hat.

6. Erkennungsverfahren nach einem der vorhergehenden Ansprüche, wobei der Hauptfluidzähler (CCQ) und die sekundären Fluidzähler (CCi) Gaszähler sind.

7. Datenkonzentrator, umfassend ein Kommunikationsmodul, das ausgebildet ist, die von dem Hauptfluidzähler (CCQ) übertragenen Hauptmessungen und die von den sekundären Fluidzählern (CCi) übertragenen sekundären Messungen zu empfangen, sowie ein Verarbeitungsmodul, das ausgebildet ist, ein Erkennungsverfahren nach einem der vorhergehenden Ansprüche durchzuführen.

8. System, umfassend einen Datenkonzentrator (6) nach Anspruch 7 und den Hauptfluidzähler (CCQ), wobei sich der Datenkonzentrator (6) und der Hauptfluidzähler (CCQ) in einem selben Raum befinden.

9. Computerprogramm, umfassend Anweisungen, die den Datenkonzentrator (6) nach Anspruch 7 dazu veranlassen, die Schritte eines Erkennungsverfahrens nach einem der Ansprüche 1 bis 6 auszuführen.

10. Computerlesbarer Aufzeichnungsträger, auf dem das Computerprogramm nach Anspruch 9 gespeichert ist.

**Claims**

1. A detection method for detecting the leak of fluid in a fluid distribution network (1) that comprises a main pipe (3) to which a main fluid meter (CCQ) is connected, and secondary pipes (4) depending from the main pipe (3) and to which secondary fluid meters (CCi) are connected, the detection method comprising the following steps that are repeated over successive measurement periods, themselves subdivided into time intervals:

   - for each time interval of a given measurement period, acquiring a main measurement taken by the main fluid meter (CCQ) and representative of the quantity of fluid distributed via the main pipe (3) during said time interval, and, for each secondary fluid meter (CCi), acquiring a secondary measurement taken by said secondary fluid meter and representative of the quantity of fluid that is distributed during said time interval via the secondary pipe (4) to which said secondary fluid meter is connected;
   - for each time interval of the given measurement period, calculating a comparison value representative of the main measurement and the sum of the secondary measurements;
   - derive from the comparison values whether or not a fluid leak has occurred during the given measurement period, **characterised in that** the detection method comprise, for each secondary fluid meter (Cci), of step of evaluating a first secondary measurement representative of the quantity of fluid that is distributed via the secondary pipe (4) to which said secondary fluid meter (CCi) is connected during the first time interval of the given measurement period, which is determined by subtracting:

   --from a total secondary measurement representative of the quantity of fluid distributed via the secondary pipe (4) to which said secondary fluid meter is connected up to the beginning of the measurement period following the given measurement period

   the sum:

   - of a total secondary measurement representative of the quantity of fluid distributed via the secondary pipe (4) to which said secondary fluid meter is connected up to the beginning of the given measurement period;
   - and of the sum of the secondary measurements for all the time intervals of the given measurement period following the first time interval.

2. The detection method according to claim 1, wherein for each time interval of the given measurement period, the comparison value is equal to the ratio between the main measurement and the sum of the secondary measurements.

3. The detection method according to claim 2, comprising the step of determining a maximum of the comparison values over the given measurement period, and of detecting that a fluid leak has occurred during the given measurement period if the maximum of the comparison values is greater than a predetermined threshold.

4. The detection method according to any one of the preceding claims, wherein, for the main fluid meter (CCQ), a first main measurement representative of the quantity of fluid distributed via the main pipe (3) during the first time interval of the given measurement period, is evaluated by using the following formula:

$$\Delta CCQ_{j\_0} = CQ_{j+1} - (CQ_j + \sum_{k=1}^{k=K-1} \Delta CCQ_{j\_k})$$

where:

   - · j is the given measurement period;
   - · K is the number of time intervals in each measurement period;
   - $\Delta CCQ_{j\_0}$ is the first main measurement;
   - $CQ_j$ is a total main measurement representative of the total quantity of fluid distributed via the main pipe up to the beginning of the given measurement period;
   - $CQ_{j+1}$ is a total main measurement representative of the total quantity of fluid distributed via the main pipe up to the beginning of the measurement period following the given measurement period
   - the $CCQ_{j\_k}$ are the main measurements for the time intervals of the given measurement period following the first time interval.

5. The detection method according to any one of the preceding claims, wherein each measurement period has a duration of one day, and wherein each time interval has a duration of one hour.

6. The method according to any one of the preceding claims, wherein the main fluid meter (CCQ) and the secondary fluid meters (CCi) being gas meters.

7. A data concentrator comprising both a communication module arranged to receive the main measurements transmitted by the main fluid meter (CCQ) and the secondary measurements transmitted by the secondary fluid meters (CCi), and also a processor module arranged to perform the detection method according to any one of the preceding claims.

8. A system comprising a data concentrator (6) according to claim 7 and the main fluid meter (CCQ), the data concentrator (6) and the main fluid meter (CCQ) being located in the same room.

9. A computer program including instructions that cause the data concentrator according to claim 7 to execute the steps of the detection method according to any one of claims 1 to 6.

10. A recording media which can be read by a computer, on which the computer program according to claim 9 is recorded.

Fig. 1

**RÉFÉRENCES CITÉES DANS LA DESCRIPTION**

**Documents brevets cités dans la description**

- WO 2015159279 A1